# FASCICULE DE BREVET EUROPEEN

(11) **EP 3 278 502 B1**
(45) Date de publication et mention de la délivrance du brevet: **04.09.2019**
(21) Numéro de dépôt: 16715027.5
(22) Date de dépôt: 18.03.2016
(51) Int. Cl.: H04L 12/24, H04L 29/08, H04W 4/50, G06F 8/65

(54) **TECHNIQUE D'ADMINISTRATION A DISTANCE**
FERNVERWALTUNGSTECHNIK
REMOTE ADMINISTRATION TECHNIQUE

(30) Priorité: 31.03.2015 FR 1552753
(43) Date de publication de la demande: 07.02.2018
(73) Titulaire: Orange, 75015 Paris (FR)
(72) Inventeur: MARCHE, Mikaël, 38830 Saint Pierre D'allevard (FR); ROULAND, Julien, 38400 Saint Martin D'heres (FR)
(86) Numéro de dépôt international: PCT/FR2016/050612
(87) Numéro de publication internationale: WO 2016/156696

(56) Documents cités:
- EP-A1- 1 760 583
- WO-A2-2010/030480
- US-A1- 2010 135 201

## Description

L'invention se rapporte au domaine général des télécommunications.

L'invention concerne plus particulièrement l'administration à distance d'un dispositif d'un réseau local par un serveur d'administration connecté à un réseau de communication étendu.

Afin de garantir des services de qualité, il est préférable qu'un opérateur de réseau puisse administrer à distance des dispositifs.

L'administration à distance des dispositifs nécessite notamment :
- de détecter et de connaitre les dispositifs administrés, par exemple leurs numéros de série, leurs versions matérielle et logicielle ;
- de superviser ces dispositifs, par exemple en obtenant des informations de supervision et des indicateurs de performance.

Dans un réseau local, une passerelle d'accès permet notamment à des dispositifs localisés dans un site client d'accéder à un réseau de communication étendu WAN (pour « Wide Area Network »), tel que le réseau Internet. Ces dispositifs sont également appelés CPE, pour « Customer Premise Equipment ». Pour un réseau local, il s'agit notamment de la passerelle d'accès, d'un décodeur TV « Set-Top-Box », d'un terminal mobile. Dans le contexte d'un réseau domotique, il s'agit également d'équipements d'électroménager, de systèmes d'alarme, de capteurs.

La gestion à distance des dispositifs d'un réseau local s'appuie par exemple sur un rapport technique élaboré par le Broadband Forum, TR-069 « CPE WAN Management Protocol ». Ce rapport technique définit un protocole CWMP, spécifiant la communication entre un serveur d'administration, appelé serveur d'auto-configuration distant ACS (pour « Auto-configuration Server »), et un dispositif du réseau local. Le protocole CWMP définit un mécanisme qui permet notamment une auto-configuration sécurisée des dispositifs du réseau local et d'autres fonctions de gestion de ces dispositifs.

Il est notamment possible à l'opérateur du réseau d'effectuer des interventions à distance, telles que :
- mettre à jour le logiciel (« software ») ou le microcode (« firmware ») d'un dispositif, lorsqu'une évolution de la version logicielle ou du microcode est requise ;
- effectuer un diagnostic lorsqu'un dispositif présente un disfonctionnement ;
- installer et configurer dynamiquement de nouveaux services ;
- superviser l'état et les performances d'un dispositif.

Le protocole CWMP s'appuie sur le protocole Internet, plus précisément sur TCP/IP (pour « Transmission Control Protocol »).

La mise à jour à distance du logiciel ou du microcode est une opération nécessitant des précautions particulières. Il est préférable de ne pas l'interrompre en cours d'exécution. En effet, ceci risque de corrompre le logiciel ou le microcode et empêcher un fonctionnement du dispositif en cours de mise à jour. Par ailleurs, l'opération de mise à jour peut générer une interruption de service au niveau du dispositif. Lorsque le dispositif est une passerelle d'accès au réseau étendu pour un ensemble de dispositifs d'un réseau local, le service est également interrompu pour cet ensemble de dispositifs. Les mises à jour sont alors souvent programmées par l'opérateur pour s'exécuter pendant la nuit afin d'en limiter les impacts. Il n'est toutefois pas garanti que le dispositif à mettre à jour ne soit pas en cours d'utilisation lors d'une mise à jour nocturne. Il est ici souligné que les mises à jour s'effectuent généralement sans demande de validation de la part d'un utilisateur du dispositif.

Le document WO2010/030480 décrit un procédé d'administration d'un dispositif permettant de reporter une mise à jour d'un logiciel en fonction d'un modèle de données élaboré à partir de données relatives à un utilisateur du dispositif collectées lors de l'utilisation du logiciel.

Un des buts de l'invention est de remédier à des insuffisances/inconvénients de l'état de la technique et/ou d'y apporter des améliorations.

Selon un premier aspect, l'invention a pour objet un procédé d'administration à distance d'un dispositif d'un réseau local par un serveur d'administration connecté à un réseau de communication étendu, ledit procédé comprenant :
- obtention d'au moins une donnée représentative d'une activité humaine dans une zone géographique dans laquelle se situe le dispositif à mettre à jour ;
- mise à jour lorsque la donnée obtenue n'indique aucune activité humaine dans ladite zone géographique ;
- report de la mise à jour lorsque la donnée obtenue indique une activité humaine dans ladite zone géographique.

Une donnée représentative d'une activité humaine, également appelée donnée d'actimétrie, indique si une activité humaine , ou activité de vie, est détectée ou non et est associée à une zone géographique. Des sondes ou des capteurs d'activité, par exemple des capteurs domotiques, sont disposés dans une zone de service du dispositif et fournissent des informations permettant d'en déduire une activité humaine ou une absence d'activité humaine dans un périmètre de détection. Un capteur domotique correspond par exemple à un capteur de mouvement, un capteur de présence, un détecteur d'événement (par exemple, ouverture ou fermeture de porte, activation d'un équipement d'électroménager), un capteur pour un service de santé, ... La donnée d'actimétrie peut être fournie directement par un capteur ou bien être déduite d'une analyse d'informations collectées par des capteurs. A titre d'exemples illustratifs, une consommation instantanée d'électricité ou d'eau permet de déduire une activité humaine dans une zone géographique.

Cette activité humaine peut être liée à un ou plusieurs utilisateurs susceptibles d'utiliser le dispositif à mettre à jour. A titre d'exemple illustratif, le dispositif à mettre à jour est un décodeur TV, également appelé STB, pour « Set-Top-Box ». Ce dispositif est situé dans le salon d'une habitation, correspondant à une zone de service d'un réseau local. Si aucune activité humaine n'est détectée dans le salon, il est possible d'en déduire qu'aucun utilisateur n'est susceptible d'utiliser le dispositif et que la mise à jour peut être effectuée immédiatement. Dans le cas contraire, c'est-à-dire lorsqu'une activité humaine est détectée dans le salon, la mise à jour est reportée.

On comprend qu'ainsi grâce au procédé, l'impact d'une mise à jour pour une personne susceptible d'utiliser un dispositif située dans la zone de service du réseau local est limité. Ceci est particulièrement important lorsque cette mise à jour entraîne une interruption de service associée à un redémarrage du dispositif.

Ce procédé est notamment avantageux lorsque l'opérateur du réseau ne dispose pas de moyens techniques pour prévenir le ou les personnes susceptibles d'utiliser le dispositif et leur demander leur accord avant d'effectuer une mise à jour. En effet, certains dispositifs ne disposent pas d'une interface homme-machine élaborée leur permettant d'interagir de manière simple et conviviale avec le ou les utilisateurs. Ceci est le cas par exemple pour des décodeurs TV, des points d'accès au réseau de communication étendu, des passerelles résidentielles. Ainsi, un report de la mise à jour peut être décidé en fonction d'une donnée représentative d'une activité humaine indiquant une activité humaine ou de vie dans une zone géographique dans laquelle se situe le dispositif à mettre à jour. Cette activité humaine ou activité de vie peut correspondre à celle de n'importe quelle personne qu'elle soit un utilisateur du dispositif ou non. La mise à jour est par ailleurs effectuée indépendamment d'une activité humaine d'un utilisateur qui est propriétaire du dispositif. Ceci est particulièrement important dans un environnement tel qu'une habitation, où tous les membres d'une famille sont susceptibles d'être utilisateurs du dispositif.

Il est ici souligné que dans un mode de réalisation particulier, le procédé exploite des données d'actimétrie élaborées à partir de mesures physiques collectées par des capteurs ou des sondes pour un service, tel qu'un service domotique intelligent. Ce service met en oeuvre un ensemble de solutions automatisées et intelligentes au moyen de règles d'action, qui contrôlent et observent l'environnement du réseau local pour mettre en oeuvre des fonctions de confort, de sécurité, de gestion de l'énergie et de santé. Ainsi, dans ce mode de réalisation, il n'est pas nécessaire de déployer de nouveaux équipements dans le réseau local. Ce service domotique intelligent peut être fourni par l'opérateur du réseau domestique ou local ou bien être interrogeable par un équipement de ce dernier.

Le procédé couple ainsi des données d'actimétrie collectées par exemple pour un service domotique avec un service d'administration des dispositifs d'un réseau local afin d'améliorer l'expérience utilisateur. Dans un mode de réalisation particulier, un dispositif de collecte d'informations d'activité humaine (également appelé « box domotique ») est lui-même administré par l'opérateur du réseau domestique.

En d'autres termes, si l'actimétrie de l'environnement du réseau local ou d'une pièce dans laquelle un dispositif est présent et à mettre à jour, est nulle, on en déduit une absence d'activité humaine ou de vie. L'opérateur peut utiliser cette information d'absence d'activité humaine pour mettre à jour les dispositifs qu'il administre sans risquer de gêner un utilisateur. La donnée d'actimétrie peut correspondre à une information explicite d'absence d'activité humaine envoyée par un capteur ou bien être déduite implicitement de l'absence de réception d'informations en provenance d'un ou de plusieurs capteurs ou sondes.

Les différents modes ou caractéristiques de réalisation mentionnés ci-après peuvent être ajoutés indépendamment ou en combinaison les uns avec les autres, aux étapes du procédé d'administration à distance tel que défini précédemment.

Dans un mode de réalisation particulier, le serveur d'administration obtient une ou des données d'activité d'un serveur d'actimétrie, associé au serveur domotique intelligent et connecté au réseau de communication étendu. Ce serveur d'actimétrie centralise les informations pour un ensemble de réseaux locaux ou domotiques. Il élabore des données d'actimétrie à partir d'informations collectées par des sondes ou des capteurs.

Dans un mode de réalisation particulier, le procédé d'administration à distance comprend en outre un envoi d'une commande de mise à jour par le système d'administration au dispositif, l'exécution de ladite mise à jour étant conditionnée par ladite donnée obtenue.

Dans ce mode de réalisation, le dispositif à mettre à jour obtient la donnée représentative d'une activité humaine et prend lui-même la décision d'exécuter ou non la mise à jour en fonction de la donnée représentative d'une activité humaine. Une commande de mise à jour conditionnelle est ainsi envoyée au dispositif par le serveur d'administration.

Dans un mode de réalisation particulier, la donnée est reçue en provenance d'un capteur d'activité localisé dans la zone géographique.

Dans ce mode de réalisation, le procédé est simple à mettre en oeuvre.

Le ou les capteurs transmettent des informations d'activité spontanément à intervalles réguliers ou bien suite à une modification.

Dans un autre mode de réalisation, les informations sont obtenues sur abonnement directement auprès du capteur ou bien du serveur d'actimétrie.

Dans un mode de réalisation particulier, la donnée est déterminée à partir d'une pluralité d'informations collectées auprès de capteurs d'activité distribués dans une zone de service du réseau local.

Ainsi, la donnée représentative d'une activité humaine est obtenue par agrégation d'une pluralité d'informations ou bien par corrélation entre au moins deux informations. La donnée représentative d'une activité humaine obtenue est ainsi plus fiable.

Dans un mode de réalisation particulier, la mise à jour est exécutée suite à une obtention d'une nouvelle donnée représentative d'une activité humaine dans la zone géographique indiquant une inactivité humaine dans ladite zone géographique.

La mise à jour reportée peut être exécutée dès qu'une nouvelle donnée représentative d'une activité humaine indiquant une absence d'activité humaine est obtenue. Le risque de gêne associé à l'opération de mise à jour est ainsi diminué pour le ou les utilisateurs du dispositif.

Dans un mode de réalisation particulier, la mise à jour est exécutée à l'expiration d'une durée de report.

Afin de ne pas retarder indéfiniment la mise à jour, celle-ci peut être forcée à l'expiration de la durée de report indépendamment de la donnée représentative d'une activité humaine.

Selon un deuxième aspect, l'invention concerne également un système d'administration à distance de dispositifs, ledit système comprenant :
- un serveur d'administration connecté à un réseau de communication étendu, agencé pour administrer à distance un dispositif d'un réseau local :
- au moins un dispositif d'un réseau local à mettre à jour ;
- un module d'obtention d'au moins une donnée représentative d'une activité humaine dans une zone géographique dans laquelle se situe le dispositif à mettre à jour ;
- un module de commande de mise à jour, agencé pour exécuter la mise à jour lorsque la donnée obtenue n'indique aucune activité humaine dans ladite zone géographique et pour reporter la mise à jour lorsque la donnée obtenue indique une activité humaine dans ladite zone géographique.

Les avantages énoncés pour le procédé d'administration à distance selon le premier aspect sont transposables directement au système.

Selon un troisième aspect, l'invention concerne également un serveur d'administration à distance de dispositifs, ledit serveur comprenant :
- un module d'administration, agencé pour administrer à distance au moins un dispositif d'un réseau local :
- un module d'obtention d'au moins une donnée représentative d'une activité humaine dans une zone géographique dans laquelle se situe le dispositif à mettre à jour ;
- un module de commande de mise à jour, agencé pour exécuter la mise à jour lorsque la donnée obtenue n'indique aucune activité humaine dans ladite zone géographique et pour reporter la mise à jour lorsque la donnée obtenue indique une activité humaine dans ladite zone géographique.

Les avantages énoncés pour le procédé d'administration à distance selon le premier aspect sont transposables directement au serveur.

Selon un quatrième aspect, l'invention concerne également un dispositif d'un réseau local, ledit dispositif comprenant :
- un module d'administration, agencé pour être administré à distance par un serveur d'administration :
- un module d'obtention d'au moins une donnée représentative d'une activité humaine dans une zone géographique dans laquelle se situe le dispositif à mettre à jour ;
- un module de commande de mise à jour, agencé pour exécuter la mise à jour lorsque la donnée obtenue n'indique aucune activité humaine dans ladite zone géographique et pour reporter la mise à jour lorsque la donnée obtenue indique une activité humaine dans ladite zone géographique.

Les avantages énoncés pour le procédé d'administration à distance selon le premier aspect sont transposables directement au dispositif.

Selon un cinquième aspect, l'invention concerne un programme pour un dispositif, comprenant des instructions de code de programme destinées à commander l'exécution de celles des étapes du procédé d'administration à distance précédemment décrit mises en oeuvre par le dispositif, lorsque ce programme est exécuté par ce dispositif et un support d'enregistrement lisible par un dispositif sur lequel est enregistré un programme pour un dispositif.

Le dispositif correspond au serveur d'administration ou bien au dispositif du réseau local à mettre à jour.

Les avantages énoncés pour le procédé d'administration à distance selon le premier aspect sont transposables directement au programme pour un dispositif et au support d'enregistrement.

La technique d'administration à distance d'un dispositif d'un réseau local sera mieux comprise à l'aide de la description suivante de modes de réalisation particuliers, en référence aux dessins annexés sur lesquels :
- la figure 1 représente un système d'administration à distance dans un réseau de communication dans un mode de réalisation particulier ;
- la figure 2 illustre des étapes d'un procédé d'administration à distance mises en oeuvre dans un système d'administration selon un mode particulier de réalisation ;
- les figures 3A-3D illustrent des échanges dans un système d'administration pour mettre en oeuvre un procédé d'administration à distance selon différents modes particuliers de réalisation ;
- la figure 4 représente un serveur d'administration selon un mode particulier de réalisation ;
- la figure 5 représente un dispositif selon un mode particulier de réalisation.

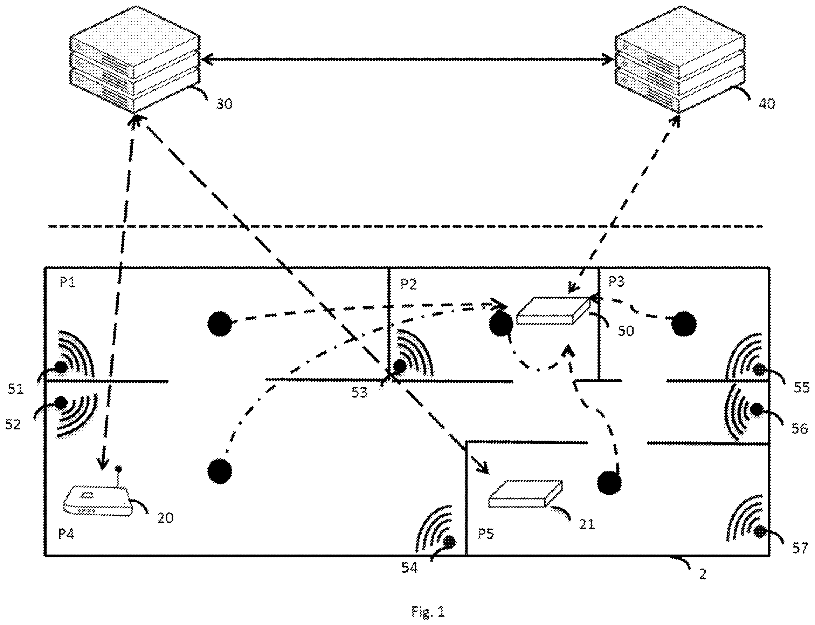

La **figure 1** représente, dans leur environnement, une pluralité de dispositifs 20, 21 d'un réseau local administrés à distance par un ensemble d'équipements d'administration. Le protocole IP (pour « Internet Protocol ») est utilisé par les dispositifs pour communiquer entre eux dans le réseau local et également pour communiquer avec un réseau de communication étendu ou WAN (pour « Wide Area Network »), tel que le réseau Internet, non représenté sur la figure 1.

Pour l'environnement représenté à la figure 1, on entend par réseau de communication local 2 un réseau de type LAN (« Local Access Network »). Ce réseau peut être en particulier un réseau domestique ou un réseau d'entreprise. Une passerelle d'accès 20 est agencée pour fournir à des dispositifs du réseau local un accès vers le réseau de communication étendu (par exemple Internet) par l'intermédiaire d'un réseau d'accès. Le réseau d'accès est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home »). Aucune limitation n'est attachée au type du réseau d'accès. Pour simplifier la figure 1, le réseau local est représenté sous la forme d'un plan d'une habitation. Cette habitation comprend un ensemble de pièces d'habitation P1-P5.

Le réseau local 2 peut être aussi bien un réseau filaire de type Ethernet, selon la norme IEEE 802.3, qu'un réseau sans fil de type Wi-Fi, selon la norme IEEE 802.11 ou bien encore un réseau par courant porteur en ligne CPL.

Les dispositifs d'un réseau local 2 peuvent être n'importe quels dispositifs, par exemple domestiques, disposant d'une connexion réseau filaire ou sans-fil. Il peut s'agir par exemple, d'un ordinateur, d'une tablette tactile, d'un téléphone mobile, d'un poste de radio connecté, d'un téléphone fixe, d'un rétroprojecteur, d'une télévision, d'un décodeur TV (« Set-Top Box »), d'une console de jeux, de dispositifs électroménagers, etc. On se limite par la suite à des dispositifs administrés à distance par l'ensemble d'équipements d'administration. Ces dispositifs sont également appelés CPE, pour « Customer Premise Equipment ». De tels dispositifs contribuent à la mise en oeuvre d'un service fourni par l'opérateur chez un client. Il s'agit par exemple d'une passerelle d'accès au réseau de communication étendu, d'un décodeur TV, d'un contrôleur de réseau domotique,...Le dispositif 21 est par exemple un décodeur TV.

L'ensemble d'équipements d'administration regroupe une pluralité d'équipements permettant à l'opérateur du réseau de communication d'administrer et de superviser des dispositifs, notamment des dispositifs appartenant à des réseaux locaux, dont la passerelle d'accès 20 et le décodeur TV 21. L'ensemble d'équipements d'administration comprend notamment un serveur d'administration 30, également appelé serveur d'auto-configuration ACS (pour «Auto-Configuration Server »), un centre d'appel et des centres de support opérationnels (OSS, pour « Operational Support System ») ou orientés métiers (BSS, pour « Business Support System »).

Dans le mode de réalisation décrit, le serveur d'administration 30 dialogue avec les dispositifs du réseau local 2 en vue de leur administration selon le protocole de gestion à distance CWMP (« CPE WAN Management Protocol ») défini dans le rapport technique TR-069 élaboré par le Broadband Forum. Aucune limitation n'est attachée à l'utilisation de ce protocole particulier. Dans d'autres modes de réalisation, il est par exemple possible de mettre en oeuvre la spécification OMA-Device Management définie par l'organisation OMA (pour « Open Mobile Alliance ») pour l'administration de terminaux mobiles.

Au moyen du protocole CWMP, le serveur d'administration 30 peut notamment :
- obtenir et gérer à distance un état du réseau local 2, des dispositifs qui lui sont connectés ;
- initier des tests de diagnostics ;
- télécharger des fichiers de logiciel ou de microcode et
- gérer des événements.

L'application d'administration à distance utilise le protocole CWMP et s'appuie sur des couches protocolaires TCP/IP, SSL/TLS (pour « Secure Sockets Layer / Transport Layer Security », HTTP (pour « HyperText Transfer Protocol »), SOAP (pour « Simple Object Access Protocol »), RPC (pour « Remote Procédure Call »).

On se place par la suite à titre illustratif dans le cadre d'un réseau local domestique. Aucune limitation n'est attachée à cet exemple particulier et la description qui suit est aisément transposable à un réseau local de type réseau d'entreprise.

Un service d'actimétrie est également proposé dans l'environnement du réseau local 2. On appelle actimétrie une mesure d'une activité humaine, également appelée activité de vie. A cet effet, des sondes ou capteurs domotiques 51-57 sont répartis dans les différentes pièces de l'habitation. Ces sondes ou capteurs, également appelés capteurs d'activité, effectuent des mesures physiques à partir desquelles il est possible de détecter une activité humaine (ou de vie) ou une absence d'activité humaine dans une zone géographique du réseau local, c'est-à-dire une pièce d'habitation dans cet exemple. Les capteurs domotiques 51-57 correspondent par exemple à des détecteurs de mouvement, des caméras, des prises électriques analysant une consommation, des sondes (eau, chaleur, électricité...)... Le capteur 51 est positionné dans un angle de la pièce d'habitation P1 (cuisine). Les capteurs 52 et 54 sont positionnés chacun dans un angle de la pièce d'habitation P4 (salon), dans laquelle se situe le dispositif 20. Le capteur 53 est positionné dans un angle de la pièce d'habitation P2 (première chambre), dans laquelle se situe également un dispositif 50 de collecte d'informations, notamment d'informations d'activité humaine (ou de vie). Le capteur 55 est positionné dans un angle de la pièce d'habitation P3 (salle de bains). Le capteur 57 est positionné dans un angle de la pièce d'habitation P5 (deuxième chambre), dans laquelle est installé le dispositif 21. Le capteur 56 est positionné dans un couloir d'accès aux pièces d'habitation P2, P3, P5. Ces capteurs communiquent avec le dispositif 50 de collecte au moyen d'un réseau de communication sans fil, conforme par exemple aux normes Z-Wave, Zigbee, « Wireless M-BUS », ... Aucune limitation n'est attachée à ce réseau de communication sans fil.

Le dispositif 50 de collecte, également appelé « box domotique », est agencé pour recevoir en provenance des capteurs domotiques 51-57 des mesures physiques, pour analyser ces mesures pour produire des informations contextualisées, telles que des données d'actimétrie, et pour transmettre les données d'actimétrie à un serveur d'actimétrie 40. Une donnée d'actimétrie est une donnée représentative d'une activité humaine (ou de vie) dans une zone géographique, par exemple une pièce d'habitation, à un instant donné. Les mesures physiques correspondent par exemple à une détection ou une absence de détection de présence, une détection d'une ouverture ou d'une fermeture de portes, de volets, une consommation instantanée d'électricité ou d'eau.... La donnée représentative d'une activité humaine (ou de vie) est ainsi déterminée à partir d'une pluralité d'informations ou de mesures physiques collectées auprès de capteurs d'activité distribués dans une zone de service du réseau local. En d'autres termes, cette donnée permet d'indiquer si une personne est active dans une zone géographique.

Aucune limitation n'est attachée au type des capteurs, ni au type des mesures effectuées. Le serveur d'actimétrie 40 centralise le contrôle et l'observation des capteurs domotiques de l'habitation. Les données d'actimétrie peuvent par exemple être utilisées pour un service de surveillance dans le cadre d'un service de maintien à domicile d'une personne âgée. Ce service est uniquement donné à titre illustratif et aucune limitation n'est attachée à ce service. Les données d'actimétrie donnent par exemple une indication si une personne est présente dans l'habitation, si une personne est présente dans une pièce de l'habitation.

Sur la figure 1, à titre illustratif, les capteurs d'activité 51, 55, 57 envoient une information d'inactivité humaine au dispositif 50 de collecte (trait tiret sur la figure 1) et les capteurs d'activité 52, 53 envoient une information d'activité humaine au dispositif 50 de collecte (trait tiret-point sur la figure 1). Le serveur d'actimétrie 40 obtient ainsi à un instant donné :
- pour chacune des pièces d'habitation P4 (salon) et P2 (première chambre) une donnée indiquant une activité humaine,
- pour chacune des pièces d'habitation P1 (cuisine), P3 (salle de bains) et P5 (deuxième chambre) une donnée indiquant une absence d'activité humaine,
- pour l'habitation dans son ensemble, une donnée indiquant une activité humaine.

Dans cet exemple, les capteurs d'activité sont agencés pour envoyer une information d'absence d'activité humaine. Il est ici souligné que cette information peut également être déduite de manière implicite en raison de la non réception d'une information d'activité humaine. Ceci est le cas notamment du capteur d'activité 56, situé dans le couloir de l'habitation, qui n'a transmis aucune information.

Dans ce mode de réalisation, le serveur d'actimétrie 40 centralise des données représentatives d'une activité humaine dans une zone géographique pour une pluralité d'habitations et est connecté au réseau de communication étendu. Il est notamment interrogeable par le serveur d'administration 30.

Dans un autre mode de réalisation, le dispositif 50 de collecte centralise des données représentatives d'une activité humaine dans une zone géographique pour l'habitation correspondant au réseau local 2.

Dans un mode de réalisation particulier, le dispositif 50 de collecte appartient au réseau local 2. Un dispositif du réseau local peut ainsi interroger le dispositif de collecte pour obtenir une donnée d'actimétrie.

Dans un mode de réalisation particulier, le dispositif 50 de collecte est également administré à distance par le serveur d'administration 30.

Un système d'administration à distance comprend notamment :
- le serveur d'administration 30 connecté à un réseau de communication étendu, agencé pour administrer à distance un dispositif d'un réseau local :
- au moins un dispositif 20, 21 d'un réseau local 2 à mettre à jour ;
- un module d'obtention d'au moins une donnée représentative d'une activité humaine dans une zone géographique dans laquelle se situe un dispositif à mettre à jour ;
- un module de commande de la mise à jour, agencé pour reporter la mise à jour lorsque la donnée obtenue indique une activité humaine dans ladite zone géographique et pour l'exécuter dans le cas contraire.

Les données représentatives d'une activité humaine dans une zone géographique peuvent être obtenues par un module d'obtention sur interrogation ou bien sur abonnement. Dans un mode de réalisation particulier, le module d'obtention transmet par exemple une requête au serveur 40 ou au dispositif 50 pour obtenir la donnée pour une zone géographique où se situe le dispositif à mettre à jour. Dans un autre mode de réalisation particulier, le module d'obtention s'abonne auprès du serveur 40 ou du dispositif 50 pour obtenir la donnée pour une zone géographique où se situe le dispositif à mettre à jour, lorsqu'elle est modifiée.

Dans un autre mode de réalisation, la donnée représentative d'une activité humaine dans une zone géographique est obtenue directement auprès d'un capteur d'activité installé et localisé dans cette zone géographique. A titre d'exemple illustratif, un capteur de mouvement peut ainsi envoyer directement une information de détection, correspondant ainsi à une donnée représentative d'une activité humaine.

Il est également souligné que la zone géographique prise en compte dépend du dispositif à mettre à jour. A titre d'exemple illustratif, lorsque le dispositif à mettre à jour est une passerelle d'accès au réseau de communication étendu permettant un accès à ce réseau pour l'ensemble des dispositifs du réseau local 2, la zone géographique correspond à l'habitation dans son ensemble. Lorsque le dispositif à mettre à jour est un décodeur TV situé dans une pièce de l'habitation, la zone géographique correspond alors à cette pièce. La zone géographique à considérer dépend ainsi de la nature du dispositif à mettre à jour, du service offert par ce dispositif et de l'emplacement physique du dispositif.

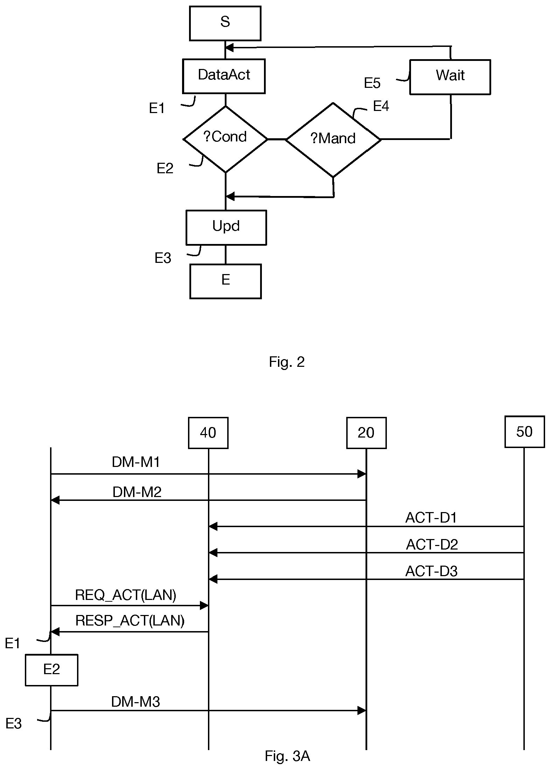

Nous allons maintenant décrire la technique d'administration à distance dans un mode particulier de réalisation en relation avec la **figure 2****.**

L'exécution des étapes suivantes est déclenchée lorsqu'une mise à jour doit être installée sur un dispositif du réseau local 2 administré par le serveur d'administration.

Dans une étape E1, le module d'obtention obtient au moins une donnée représentative d'une activité humaine dans une zone géographique dans laquelle se situe le dispositif à mettre à jour. Cette donnée peut être obtenue sur demande ou bien sur abonnement comme décrit précédemment.

Dans une étape E2, le module de commande de la mise à jour vérifie en fonction de la donnée obtenue si la mise à jour peut être effectuée immédiatement. Plus précisément, le module de commande prend une décision d'exécution de la mise à jour ou de report de la mise à jour en fonction de la donnée obtenue. D'autres conditions peuvent également être prises en compte lors de cette étape E2, comme par exemple le fait qu'un service est en cours d'exécution dans le réseau local.

Lorsque la donnée n'indique aucune activité humaine dans la zone géographique où est localisé le dispositif à mettre à jour, la mise à jour peut être effectuée immédiatement et une commande de mise à jour est transmise dans une étape E3 au dispositif à mettre à jour. Ceci termine le processus de mise à jour.

Lorsque la donnée indique une activité humaine dans la zone géographique où est localisé le dispositif à mettre à jour, le module de commande vérifie dans une étape E4 si la mise à jour est obligatoire. Ceci est par exemple le cas lorsqu'elle a été reportée plusieurs fois ou lorsqu'une durée de report a expiré. Ceci est également le cas pour des mises à jour de sécurité.

Lorsque la mise à jour est obligatoire, l'étape E3 est mise en oeuvre, c'est-à-dire une commande de mise à jour est transmise au dispositif à mettre à jour.

Lorsque la mise à jour n'est pas obligatoire, dans une étape E5, le module de commande reporte la mise à jour. Une temporisation associée à une durée de report est par exemple déclenchée, afin de garantir que la mise à jour va bien être effectuée dans un délai maximum correspondant à la durée de report. Le module de commande met alors de nouveau en oeuvre l'étape E1. Lorsqu'une nouvelle donnée indique une absence d'activité humaine dans la zone géographique ou à l'expiration de la donnée de report, la mise à jour peut alors être exécutée à l'étape E3.

Dans un mode de réalisation particulier, les étapes du processus de mise à jour sont mises en oeuvre directement par le dispositif à mettre à jour. Dans ce mode de réalisation particulier, le dispositif à mettre à jour reçoit en provenance du système d'administration une commande de mise à jour, l'exécution de cette mise à jour étant conditionnée par ladite donnée obtenue. Le dispositif à mettre à jour met alors en oeuvre les différentes étapes du procédé, l'étape E3 correspondant alors à une commande d'exécution de la mise à jour.

Ainsi, la mise à jour du dispositif est effectuée lorsqu'aucune activité humaine n'est détectée pour une zone géographique où se situe le dispositif. Ceci permet de limiter la gêne occasionnée aux utilisateurs potentiels du dispositif. Une interruption de service associée à la mise à jour se produit ainsi de préférence lorsqu'il est peu probable que le dispositif soit utilisé.

La **figure 3A** illustre une mise en oeuvre du procédé d'administration, tel que décrit précédemment, par un système d'administration dans un premier mode de réalisation. Le dispositif administré correspond à la passerelle d'accès 20 située dans la pièce d'habitation P4. Dans ce premier mode de réalisation, le serveur d'administration 30 interagit avec le serveur d'actimétrie 40 centralisant des données d'actimétrie pour obtenir une donnée représentative d'une activité humaine dans une zone géographique desservie par le réseau local.

Le serveur d'administration 30 envoie une demande DM-M1 relative à un état du dispositif 20. Cette demande M1 est par exemple conforme au protocole CWMP.

Le dispositif 20 répond en fournissant son état dans un message DM-M2. Cette réponse M2 est par exemple conforme au protocole CWMP.

De manière indépendante, le dispositif 50 de collecte transmet une pluralité de données ACT-D1, ACT-D2, ACT-D3 représentatives d'une activité humaine dans une zone géographique au serveur d'actimétrie 40.

En fonction de l'état obtenu du dispositif 20, le serveur d'administration 30 détermine qu'une mise à jour est à exécuter et transmet une demande REQ_ACT(LAN) de données d'actimétrie au serveur d'actimétrie 40 pour le réseau local 2 auquel appartient le dispositif 20 à mettre à jour. Le serveur d'actimétrie transmet les données d'actimétrie associées au réseau local 2 dans un message de réponse RESP_ACT(LAN) (étape E1). Les données sont par exemple fournies pour l'ensemble des pièces d'habitation.

A l'étape E2, le serveur d'administration 30 vérifie si la mise à jour peut être effectuée en fonction d'une donnée reçue pour la zone géographique où se situe le dispositif 20.

La commande de mise à jour peut alors être envoyée (étape E3) au dispositif 20 dans un message DM-M3 ou la mise à jour est reportée (étape E5). Le message M3 est par exemple conforme au protocole CWMP.

Dans un autre mode de réalisation, non représenté, le serveur d'administration 30 s'abonne auprès du serveur d'actimétrie 40 pour obtenir des données d'actimétrie lorsqu'il y a une modification d'une donnée d'actimétrie associée au réseau local. A chaque réception d'une donnée d'actimétrie associée au réseau local, le serveur d'administration 30 vérifie si la mise à jour peut être effectuée. Cet abonnement peut être déclenché lorsqu'une mise à jour d'un dispositif du réseau local 2 doit être effectuée. Une fois la mise à jour réalisée, le serveur d'administration 30 se désabonne.

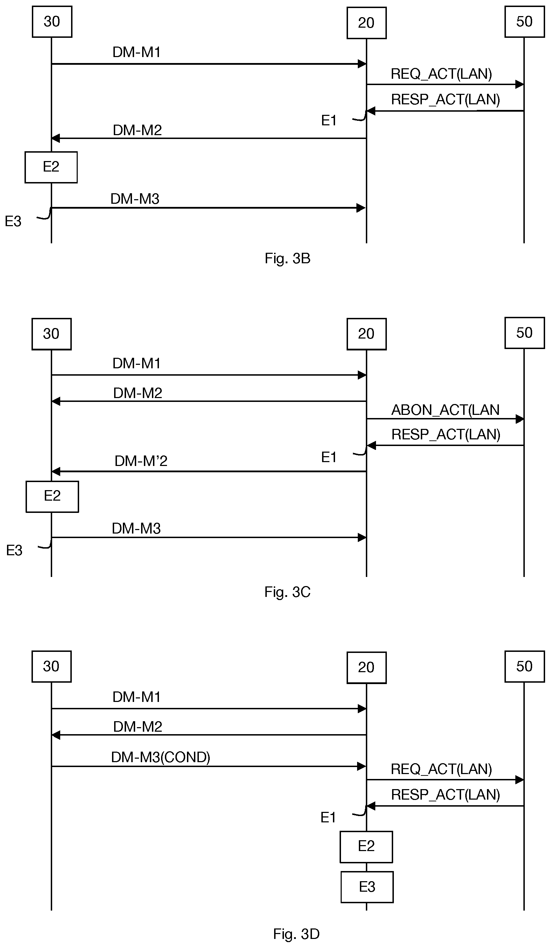

La **figure 3B** illustre une mise en oeuvre du procédé d'administration, tel que décrit précédemment, par un système d'administration dans un deuxième mode de réalisation. Le dispositif administré correspond à la passerelle d'accès 20 située dans la pièce d'habitation P4. Dans ce deuxième mode de réalisation, le dispositif 20 à mettre à jour interagit avec le dispositif 50 de collecte pour obtenir une donnée représentative d'une activité humaine dans une zone géographique. Cette interaction s'effectue ainsi au sein du réseau local.

Le serveur d'administration 30 envoie une demande DM-M1 relative à un état du dispositif 20. Cette demande M1 est par exemple conforme au protocole CWMP.

Le dispositif 20 à mettre à jour transmet une demande REQ_ACT(LAN) de données d'actimétrie au dispositif 50 de collecte. Le dispositif 50 transmet les données d'actimétrie dans un message de réponse RESP_ACT(LAN) (étape E1).

Le dispositif 20 répond au serveur d'administration 30 en fournissant son état dans un message DM-M2 et la ou les données d'actimétrie obtenues. Cette réponse M2 est par exemple construite pour être conforme au protocole CWMP et adaptée pour comprendre des données d'actimétrie à travers un modèle de données (« data model » en anglais) décrivant les informations et leur type.

En fonction de l'état du dispositif 20, le serveur d'administration 30 détermine qu'une mise à jour est à exécuter et le serveur d'administration 30 vérifie (étape E2), si la mise à jour peut être effectuée en fonction d'une donnée représentative d'une activité humaine reçue pour la zone géographique où se situe le dispositif 20.

La commande de mise à jour peut alors être envoyée (étape E3) au dispositif 20 dans un message DM-M3 ou la mise à jour est reportée (étape E5). Le message M3 est par exemple conforme au protocole CWMP.

Dans ce deuxième mode de réalisation, les données d'actimétrie sont centralisées au niveau d'un dispositif du réseau local et les échanges de données d'actimétrie s'effectuent entre dispositifs du réseau local.

La **figure 3C** illustre une mise en oeuvre du procédé d'administration, tel que décrit précédemment, par un système d'administration dans un troisième mode de réalisation. Le dispositif administré correspond à la passerelle d'accès 20 située dans la pièce d'habitation P4. Dans ce troisième mode de réalisation, le dispositif 20 à mettre à jour s'abonne auprès du dispositif 50 de collecte pour obtenir une donnée représentative d'une activité humaine dans une zone géographique.

Le serveur d'administration 30 envoie une demande DM-M1 relative à un état du dispositif 20. Cette demande M1 est par exemple conforme au protocole CWMP.

Le dispositif 20 répond en fournissant son état dans un message DM-M2. Cette réponse M2 est par exemple conforme au protocole CWMP.

Le dispositif 20 à mettre à jour transmet une demande d'abonnement ABON_ACT(LAN) de données d'actimétrie au dispositif 50 de collecte. Le dispositif 50 transmet les données d'actimétrie dans un message de réponse RESP_ACT(LAN) (étape E1).

Le dispositif 20 répond au serveur d'administration 30 en fournissant son état dans un message DM-M'2 et la ou les données d'actimétrie obtenues. Cette réponse M'2 est par exemple construite pour être conforme au protocole CWMP et est adaptée pour comprendre des données d'actimétrie, à travers le modèle de données décrivant les informations et leur type.

En fonction de l'état du dispositif 20, le serveur d'administration 30 détermine qu'une mise à jour est à exécuter et le serveur d'administration 30 vérifie (étape E2), si la mise à jour peut être effectuée en fonction d'une donnée d'actimétrie reçue pour la zone géographique où se situe le dispositif 20.

La commande de mise à jour peut alors être envoyée (étape E3) au dispositif 20 dans un message DM-M3 ou la mise à jour est reportée (étape E5). Le message M3 est par exemple conforme au protocole CWMP.

La **figure 3D** illustre une mise en oeuvre du procédé d'administration, tel que décrit précédemment, par un système d'administration dans un quatrième mode de réalisation. Le dispositif administré correspond à la passerelle d'accès 20 située dans la pièce d'habitation P4. Dans ce quatrième mode de réalisation, le dispositif 20 à mettre à jour décide d'exécuter ou de reporter la mise à jour en fonction d'une donnée représentative d'une activité humaine dans une zone géographique, obtenue auprès du dispositif 50 de collecte.

Le serveur d'administration 30 envoie une demande DM-M1 relative à un état du dispositif 20. Cette demande M1 est par exemple conforme au protocole CWMP.

Le dispositif 20 répond en fournissant son état dans un message DM-M2. Cette réponse M2 est par exemple conforme au protocole CWMP.

En fonction de l'état du dispositif 20, le serveur d'administration 30 détermine qu'une mise à jour est à exécuter. Le serveur d'administration 30 envoie alors une commande de mise à jour conditionnelle au dispositif 20 dans un message DM-M3(COND). Cette commande M3 est par exemple construite pour être conforme au protocole CWMP et adaptée pour comprendre notamment une condition relative à une activité humaine dans la zone géographique où se situe le dispositif à mettre à jour à travers le modèle de données décrivant les informations et leur type.

Le dispositif 20 à mettre à jour transmet une demande REQ_ACT(LAN) de données d'actimétrie au dispositif 50 de collecte. Le dispositif 50 transmet les données d'actimétrie dans un message RESP_ACT(LAN) (étape E1).

Le dispositif 20 vérifie (étape E2), si la mise à jour peut être effectuée en fonction d'au moins une donnée d'actimétrie reçue. En fonction de la donnée, la mise à jour est commandée et exécutée (étape E3) ou bien reportée (étape E5).

Dans ce mode de réalisation, les données d'actimétrie sont collectées et centralisées dans le réseau local. Le système d'administration envoie systématiquement une commande de mise à jour dont l'exécution est conditionnée au moins par une absence d'activité humaine. Le dispositif exécute la mise à jour en fonction d'au moins une donnée représentative d'une activité humaine dans la zone géographique où il se situe.

Dans un autre mode de réalisation, le dispositif 20 à mettre à jour transmet au dispositif 50 de collecte une demande d'abonnement REQ_ACT(LAN) de données d'actimétrie. Le dispositif 50 transmet les données d'actimétrie dans un message de réponse RESP_ACT(LAN) (étape E1). Ainsi, une fois que le dispositif à mettre à jour a reçu une commande de mise à jour, il s'abonne aux données d'actimétrie et lorsque l'activité humaine permet une mise à jour sans interruption de service, il effectue la mise à jour.

La mise à jour d'un dispositif est ainsi conditionnée par une donnée représentative d'une activité humaine dans une zone géographique dans laquelle se situe le dispositif.

Dans un mode de réalisation particulier, le procédé d'administration prend également en compte à l'étape E2 un ou des services actifs dans le réseau local. Il s'agit par exemple d'un service d'alarme, d'un service de maintien à domicile, ... En effet, pour de tels services, il est nécessaire de maîtriser des interruptions de service consécutives à une mise à jour d'un dispositif.

Dans un premier exemple illustratif de la mise en oeuvre de cette technique d'administration, un décodeur TV situé dans le salon P4 doit être mis à jour. Toutefois, une activité humaine est détectée dans cette pièce. La mise à jour est reportée afin de ne pas gêner l'utilisateur de ce dispositif et éviter des interactions de l'utilisateur avec le dispositif susceptibles d'entraîner des dommages sur le matériel.

Dans un deuxième exemple illustratif de la mise en oeuvre de cette technique d'administration, une passerelle d'accès au réseau de communication étendu doit être mise à jour. Tant qu'une activité humaine d'une personne est détectée pour l'habitation, la mise à jour est reportée. Dès que ce n'est plus le cas, la mise à jour est exécutée.

Tel que décrit précédemment, le système d'administration comprend un module d'obtention d'au moins une donnée représentative d'une activité humaine dans une zone géographique dans laquelle se situe un dispositif à mettre à jour et un module de commande de la mise à jour, agencé pour reporter la mise à jour lorsque la donnée obtenue indique une activité humaine dans ladite zone géographique et pour l'exécuter dans le cas contraire.

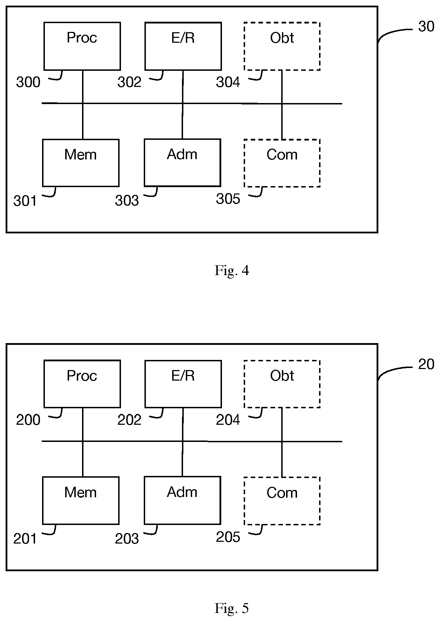

Dans un mode de réalisation particulier, le serveur d'administration 30 comprend ces deux modules. Nous allons maintenant décrire un tel serveur 30 dans un mode particulier de réalisation en référence à la **figure 4****.** Le serveur d'administration 30 est agencé pour administrer à distance des dispositifs situés dans un réseau local et comprend notamment :
- une zone mémoire 301, agencée pour mémoriser une application qui comprend des instructions de code pour mettre en oeuvre les étapes du procédé d'administration, tel que décrit précédemment ;
- une mémoire de stockage, non représentée, agencée pour stocker des données utilisées lors de la mise en oeuvre du procédé d'administration, tel que décrit précédemment :
- un processeur 300 pour exécuter des instructions de code de modules logiciels ;
- un module d'interface 302 avec le réseau de communication étendu, agencé pour émettre et recevoir des données ;
- un module d'administration 303, agencé pour mettre en oeuvre les fonctions d'administration définies dans le rapport technique TR-069 ;
- un module d'obtention 304 d'au moins une donnée représentative d'une activité humaine dans une zone géographique dans laquelle se situe un dispositif à mettre à jour ;
- un module de commande 305, agencé pour reporter la mise à jour lorsque la donnée obtenue indique une activité humaine dans ladite zone géographique et pour l'exécuter dans le cas contraire.

Il est ici souligné que le serveur d'administration 30 comprend également d'autres modules de traitement, non représentés sur la figure 4, agencés pour mettre en oeuvre les différentes fonctions de serveur d'administration.

Dans ce premier mode de réalisation, le serveur d'administration 30 interagit avec :
- le serveur d'actimétrie 40 (figure 3A) ou avec le dispositif à mettre à jour (figures 3B et 3C) pour obtenir une donnée d'actimétrie ;
- le dispositif à mettre à jour pour obtenir une information d'état et pour commander une mise à jour.

Le dispositif 20 administré par le serveur d'administration dans ce premier mode de réalisation, tel que représenté à la **figure 5****,** comprend notamment :
- une zone mémoire 201, agencée pour mémoriser une application qui comprend des instructions de code pour mettre en oeuvre les étapes du procédé d'administration, tel que décrit précédemment ;
- une mémoire de stockage, non représentée, agencée pour stocker des données utilisées lors de la mise en oeuvre du procédé d'administration, tel que décrit précédemment :
- un processeur 200 pour exécuter des instructions de code de modules logiciels ;
- un module d'interface 202, agencé pour envoyer et recevoir des données ;
- un module d'administration 203, agencé pour être administré à distance par un serveur d'administration, notamment pour échanger des données d'administration avec ce serveur.

Il est ici souligné que le dispositif 20 comprend également d'autres modules de traitement, non représentés sur la figure 5, agencés pour mettre en oeuvre les différentes fonctions de ce dispositif.

Le module d'administration 203 met par exemple en oeuvre les fonctions d'administration définies dans le rapport technique TR-069.

Dans un mode de réalisation particulier (figures 3B, 3C), le dispositif 20 comprend également un module d'obtention 204 d'au moins une donnée représentative d'une activité humaine dans une zone géographique dans laquelle il se situe. Cette donnée peut être obtenue sur requête ou sur abonnement auprès d'un dispositif de collecte 50. Cette donnée est ensuite envoyée au serveur d'administration par le module d'administration 203.

Dans un deuxième mode de réalisation, le dispositif à mettre à jour comprend :
- un module d'obtention 204 d'au moins une donnée représentative d'une activité humaine dans une zone géographique dans laquelle il se situe ;
- un module de commande 205, agencé pour reporter une mise à jour lorsque la donnée obtenue indique une activité humaine dans ladite zone géographique et pour l'exécuter dans le cas contraire.

Dans ce deuxième mode de réalisation, le serveur d'administration 30 comprend la zone mémoire 301, une mémoire de stockage, le processeur 300, le module d'interface 302 avec le réseau de communication étendu et le module d'administration 303, tels que décrits précédemment.

Le module de commande 205 est notamment agencé pour recevoir du serveur d'administration 30 une commande conditionnelle de mise à jour, tel que décrit précédemment en relation avec la figure 3D.

La technique d'administration est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 304, 305 sont agencés pour mettre en oeuvre le procédé d'administration précédemment décrit. Il s'agit de préférence de modules logiciels comprenant des instructions logicielles pour faire exécuter celles des étapes du procédé d'administration précédemment décrit, mises en oeuvre par un serveur d'administration. L'invention concerne donc aussi :
- un programme pour un serveur, comprenant des instructions de code de programme destinées à commander l'exécution des étapes du procédé d'administration précédemment décrit, lorsque ledit programme est exécuté par ce serveur ;
- un support d'enregistrement lisible par un serveur sur lequel est enregistré le programme pour un serveur.

Dans un mode de réalisation particulier, les modules 204, 205 sont agencés pour mettre en oeuvre le procédé d'administration précédemment décrit. Il s'agit de préférence de modules logiciels comprenant des instructions logicielles pour faire exécuter celles des étapes du procédé d'administration précédemment décrit, mises en oeuvre par un dispositif. L'invention concerne donc aussi :
- un programme pour un dispositif, comprenant des instructions de code de programme destinées à commander l'exécution des étapes du procédé d'administration précédemment décrit, lorsque ledit programme est exécuté par ledit dispositif ;
- un support d'enregistrement lisible par un dispositif sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Il va de soi que les modes de réalisation qui ont été décrits précédemment ont été donnés à titre purement indicatif et nullement limitatif, et que de nombreuses modifications peuvent être facilement apportées par l'homme de l'art sans pour autant sortir du cadre de l'invention.

## Revendications

1. Procédé d'administration à distance d'un dispositif (20, 21, 50) d'un réseau local (2) par un serveur d'administration (30) connecté à un réseau de communication étendu, ledit procédé comprenant :
- obtention (E1) d'au moins une donnée représentative d'une activité humaine dans une zone géographique dans laquelle se situe le dispositif à mettre à jour ;
- mise à jour (E3) lorsque la donnée obtenue n'indique aucune activité humaine dans ladite zone géographique ;
- report (E5) de la mise à jour lorsque la donnée obtenue indique une activité humaine dans ladite zone géographique.

2. Procédé d'administration selon la revendication 1, comprenant un envoi d'une commande de mise à jour (E3) par le système d'administration au dispositif, l'exécution de ladite mise à jour étant conditionnée par ladite donnée obtenue.

3. Procédé d'administration selon la revendication 1, dans lequel la donnée est reçue en provenance d'un capteur d'activité localisé dans la zone géographique.

4. Procédé d'administration selon la revendication 1, dans lequel la donnée est déterminée à partir d'une pluralité d'informations collectées auprès de capteurs d'activité distribués dans une zone de service du réseau local.

5. Procédé d'administration selon la revendication 1, dans lequel la mise à jour est exécutée (E3) suite à une obtention d'une nouvelle donnée représentative d'une activité humaine dans la zone géographique indiquant une inactivité humaine dans ladite zone géographique.

6. Procédé d'administration selon la revendication 1, dans lequel la mise à jour est exécutée à l'expiration d'une durée de report.

7. Système d'administration à distance de dispositifs, ledit système comprenant :
- un serveur d'administration (30) connecté à un réseau de communication étendu, agencé pour administrer à distance un dispositif d'un réseau local :
- au moins un dispositif (20, 21, 50) d'un réseau local (2) à mettre à jour ;
- un module d'obtention (204, 304) d'au moins une donnée représentative d'une activité humaine dans une zone géographique dans laquelle se situe le dispositif à mettre à jour ;
- un module de commande de mise à jour (205, 305), agencé pour exécuter la mise à jour lorsque la donnée obtenue n'indique aucune activité humaine dans ladite zone géographique et pour reporter la mise à jour lorsque la donnée obtenue indique une activité humaine dans ladite zone géographique.

8. Serveur d'administration (30) à distance de dispositifs, ledit serveur comprenant :
- un module d'administration (303), agencé pour administrer à distance au moins un dispositif (20, 21) d'un réseau local (2) :
- un module d'obtention (304) d'au moins une donnée représentative d'une activité humaine dans une zone géographique dans laquelle se situe le dispositif à mettre à jour ;
- un module de commande de mise à jour (305), agencé pour exécuter la mise à jour lorsque la donnée obtenue n'indique aucune activité humaine dans ladite zone géographique et pour reporter la mise à jour lorsque la donnée obtenue indique une activité humaine dans ladite zone géographique.

9. Dispositif (20, 21, 50) d'un réseau local (2), ledit dispositif comprenant :
- un module d'administration (203), agencé pour être administré à distance par un serveur d'administration (30) :
- un module d'obtention (204) d'au moins une donnée représentative d'une activité humaine dans une zone géographique dans laquelle se situe le dispositif à mettre à jour ;
- un module de commande de mise à jour (205), agencé pour exécuter la mise à jour lorsque la donnée obtenue n'indique aucune activité humaine dans ladite zone géographique et pour reporter la mise à jour lorsque la donnée obtenue indique une activité humaine dans ladite zone géographique.

10. Programme pour un dispositif, comprenant des instructions de code de programme destinées à commander l'exécution de celles des étapes du procédé d'administration selon l'une des revendications 1 à 6 mises en oeuvre par le dispositif, lorsque ledit programme est exécuté par ledit dispositif.

11. Support d'enregistrement lisible par un dispositif sur lequel est enregistré le programme selon la revendication 10.

## Patentansprüche

1. Verfahren zur Fernverwaltung einer Vorrichtung (20, 21, 50) eines lokalen Netzwerks (2) durch einen Verwaltungsserver (30), der an ein erweitertes Kommunikationsnetzwerk angeschlossen ist, wobei das Verfahren umfasst:
- Erhalt (E1) mindestens eines repräsentativen Datums für eine menschliche Aktivität in einer geografischen Zone, in der sich die zu aktualisierende Vorrichtung befindet;
- Aktualisierung (E3), wenn das erhaltene Datum keine menschliche Aktivität in der geografischen Zone anzeigt;
- Aufschub (E5) der Aktualisierung, wenn das erhaltene Datum eine menschliche Aktivität in der geografischen Zone anzeigt.

2. Verwaltungsverfahren nach Anspruch 1, umfassend ein Senden eines Aktualisierungsbefehls (E3) durch das Verwaltungssystem an die Vorrichtung, wobei die Ausführung der Aktualisierung durch das erhaltene Datum bedingt ist.

3. Verwaltungsverfahren nach Anspruch 1, bei dem das Datum von einem in der geografischen Zone lokalisierten Aktivitätssensor erhalten wird.

4. Verwaltungsverfahren nach Anspruch 1, bei dem das Datum aus einer Vielzahl von Informationen bestimmt wird, die bei Aktivitätssensoren gesammelt sind, die in einer Dienstleistungszone des lokalen Netzwerks verteilt sind.

5. Verwaltungsverfahren nach Anspruch 1, bei dem die Aktualisierung nach einem Erhalt eines neuen repräsentativen Datums für eine menschliche Aktivität in der geografischen Zone, das eine menschliche Inaktivität in der geografischen Zone anzeigt, durchgeführt wird (E3).

6. Verwaltungsverfahren nach Anspruch 1, bei dem die Aktualisierung nach Ablauf einer Aufschubdauer durchgeführt wird.

7. Fernverwaltungssystem von Vorrichtungen, wobei das System umfasst:
- einen Verwaltungsserver (30), der an erweitertes Kommunikationsnetzwerk angeschlossen und dazu vorgesehen ist, eine Vorrichtung eines lokalen Netzwerks fernzuverwalten;
- mindestens eine Vorrichtung (20, 21, 50) eines lokalen Netzwerks (2), die zu aktualisieren ist;
- Modul (204, 304) zum Erhalt mindestens eines repräsentativen Datums für eine menschliche Aktivität in einer geografischen Zone, in der sich die zu aktualisierende Vorrichtung befindet;
- ein Modul zur Steuerung einer Aktualisierung (205, 305), das dazu vorgesehen ist, die Aktualisierung durchzuführen, wenn das erhaltene Datum keine menschliche Aktivität in der geografischen Zone anzeigt, und die Aktualisierung aufzuschieben, wenn das erhaltene Datum eine menschliche Aktivität in der geografischen Zone anzeigt.

8. Server (30) zur Fernverwaltung von Vorrichtungen, wobei der Server umfasst:
- ein Verwaltungsmodul (303), das dazu vorgesehen ist, mindestens eine Vorrichtung (20, 21) eines lokalen Netzwerks (2) fernzuverwalten;
- Modul (304) zum Erhalt mindestens eines repräsentativen Datums für eine menschliche Aktivität in einer geografischen Zone, in der sich die zu aktualisierende Vorrichtung befindet;
- ein Modul zur Steuerung einer Aktualisierung (305), das dazu vorgesehen ist, die Aktualisierung durchzuführen, wenn das erhaltene Datum keine menschliche Aktivität in der geografischen Zone anzeigt, und die Aktualisierung aufzuschieben, wenn das erhaltene Datum eine menschliche Aktivität in der geografischen Zone anzeigt.

9. Vorrichtung (20, 21, 50) eines lokalen Netzwerks (2), wobei die Vorrichtung umfasst:
- ein Verwaltungsmodul (203), das dazu vorgesehen ist, von einem Verwaltungsserver (30) fernverwaltet zu werden;
- Modul (204) zum Erhalt mindestens eines repräsentativen Datums für eine menschliche Aktivität in einer geografischen Zone, in der sich die zu aktualisierende Vorrichtung befindet;
- ein Modul zur Steuerung einer Aktualisierung (205), das dazu vorgesehen ist, die Aktualisierung durchzuführen, wenn das erhaltene Datum keine menschliche Aktivität in der geografischen Zone anzeigt, und die Aktualisierung aufzuschieben, wenn das erhaltene Datum eine menschliche Aktivität in der geografischen Zone anzeigt.

10. Programm für eine Vorrichtung, umfassend Programmcodeanweisungen, die dazu bestimmt sind, die Durchführung jener der Schritte des Verwaltungsverfahrens nach einem der Ansprüche 1 bis 6, die von der Vorrichtung eingesetzt werden, zu steuern, wenn das Programm von der Vorrichtung ausgeführt wird.

11. Von einer Vorrichtung lesbarer Aufzeichnungsträger, auf dem das Programm nach Anspruch 10 aufgezeichnet ist.

## Claims

1. Method for the remote administration of a device (20, 21, 50) of a local area network (2) by an administration server (30) connected to a wide area communication network, said method comprising:
- obtaining (E1) at least one item of data representative of human activity in a geographical area in which the device to be updated is situated;
- updating (E3) when the item of data obtained does not indicate any human activity in said geographical area;
- deferring (E5) the update when the item of data obtained indicates human activity in said geographical area.

2. Administration method according to Claim 1, comprising sending of an update command (E3) by the administration system to the device, the execution of said update being conditional upon said obtained item of data.

3. Administration method according to Claim 1, wherein the item of data is received from an activity sensor located in the geographical area.

4. Administration method according to Claim 1, wherein the item of data is determined from a plurality of items of information that are collected from activity sensors that are distributed in a service area of the local area network.

5. Administration method according to Claim 1, wherein the update is executed (E3) following the obtaining of a new item of data representative of human activity in the geographical area indicating human inactivity in said geographical area.

6. Administration method according to Claim 1, wherein the update is executed upon expiry of a deferral period.

7. System for the remote administration of devices, said system comprising:
- an administration server (30) connected to a wide area communication network, designed to remotely administer a device of a local area network;
- at least one device (20, 21, 50) of a local area network (2), which device is to be updated;
- a module (204, 304) for obtaining at least one item of data representative of human activity in a geographical area in which the device to be updated is situated;
- an update command module (205, 305), designed to execute the update when the item of data obtained does not indicate any human activity in said geographical area and to defer the update when the item of data obtained indicates human activity in said geographical area.

8. Server (30) for the remote administration of devices, said server comprising:
- an administration module (303), designed to remotely administer at least one device (20, 21) of a local area network (2);
- a module (304) for obtaining at least one item of data representative of human activity in a geographical area in which the device to be updated is situated;
- an update command module (305), designed to execute the update when the item of data obtained does not indicate any human activity in said geographical area and to defer the update when the item of data obtained indicates human activity in said geographical area.

9. Device (20, 21, 50) of a local area network (2), said device comprising:
- an administration module (203), designed to be administered remotely by an administration server (30) ;
- a module (204) for obtaining at least one item of data representative of human activity in a geographical area in which the device to be updated is situated;
- an update command module (205), designed to execute the update when the item of data obtained does not indicate any human activity in said geographical area and to defer the update when the item of data obtained indicates human activity in said geographical area.

10. Program for a device, comprising program code instructions intended to command the execution of those steps of the administration method according to one of Claims 1 to 6 that are implemented by the device, when said program is executed by said device.

11. Recording medium able to be read by a device and on which the program according to Claim 10 is recorded.
